Europäisches Patentamt

European Patent Office

Office européen des brevets

(11) Veröffentlichungsnummer: **0 326 523 B1**

(12) **EUROPÄISCHE PATENTSCHRIFT**

(45) Veröffentlichungstag der Patentschrift:
06.03.91 Patentblatt 91/10

(51) Int. Cl.$^5$: **F16B 7/20, E04B 2/78**

(21) Anmeldenummer: **89810067.2**

(22) Anmeldetag: **25.01.89**

(54) **Kupplung zum lösbaren Verbinden zweier koaxialer Rohre und Tragsäule für einen Raumteiler enthaltend die Kupplung.**

(30) Priorität: **28.01.88 CH 291/88**

(43) Veröffentlichungstag der Anmeldung:
**02.08.89 Patentblatt 89/31**

(45) Bekanntmachung des Hinweises auf die
Patenterteilung:
**06.03.91 Patentblatt 91/10**

(84) Benannte Vertragsstaaten:
**AT BE CH DE ES FR GB IT LI NL SE**

(56) Entgegenhaltungen:
**GB-A- 4 598
GB-A- 1 439 159
US-A- 3 004 784**

(73) Patentinhaber: **EMBRU-WERKE, MANTEL & CIE
Rapperswilerstrasse 33
CH-8630 Rüti (CH)**

(72) Erfinder: **Rütsche, Wendolin
Talgartenstrasse 53b
CH-8630 Rüti (CH)**
Erfinder: **Menzi, Rudolf
Curtibergstrasse 51
CH-8646 Wagen (CH)**

(74) Vertreter: **Münch, Otto et al
Patentanwalts-Bureau Isler AG
Walchestrasse 23
CH-8006 Zürich (CH)**

EP 0 326 523 B1

## Beschreibung

Eine Kupplung gemäss Oberbegriff des Anspruchs 1 ist aus der GB-A-1 439 159 bekannt. Bei dieser Kupplung werden in die beiden zu verbindenden Rohrenden je eine Büchse eingeschweisst. Die eine Büchse hat eine Durchgangsbohrung, die andere ein Innengewinde. Durch die Durchgangsbohrung wird eine Schraube gesteckt, die mit ihrem Kopf an der Innenseite dieser Büchse anliegt. Auf die Schraube wird ein Vierkantrohr aufgeschoben und mit der Schraube verschweisst. Ueber das Vierkantrohr wird ein Ring mit einer Vierkant-Ausnehmung gesteckt, der den gleichen Aussendurchmesser wie die Rohre und an beiden axialen Enden je einen Zentrieransatz zum Einstecken in die Rohre hat. Durch Drehen dieses Ringes kann die Schraube gedreht und damit in das Muttergewinde in der zweiten Büchse eingeschraubt werden. Diese bekannte Rohrkupplung ist aufwendig in der Montage.

Aus der GB-A-4598/1909 ist eine weitere Rohrkupplung bekannt. Im einen Rohr ist ein Bolzen mit einem vorstehenden Riegel und einem Aussengewinde an seinem Schaft eingeschweisst. Auf das Aussengewinde ist eine Mutter aufgeschraubt. Im zweiten Rohr ist eine Büchse mit einem axial durchgehenden Langloch eingeschweisst. Zum Kuppeln wird der Riegel durch das Langloch durchgesteckt, werden die Rohre um 90° gegeneinander gedreht und schliesslich die Mutter gegen die Büchse angezogen. Auch diese Kupplung ist aufwendig in der Herstellung und erfordert zudem eine Relativdrehung der Rohre gegeneinander, was in einigen Anwendungsfällen unerwünscht ist.

Der vorliegenden Erfindung liegt die Aufgabe zugrunde, eine rasch montierbare Kupplung zu schaffen. Diese Aufgabe wird durch die kennzeichnenden Merkmale des Anspruchs 1 gelöst.

Nachfolgend wird ein Ausführungsbeispiel der Erfindung anhand der Zeichnung erläutert.

Darin zeigt:

Fig. 1 einen Axialschnitt durch eine Rohrkupplung,

Fig. 2 einen Schnitt längs der Linie II-II in Fig. 1,

Fig. 3 einen Schnitt längs der Linie III-III in Fig. 1, und

Fig. 4 eine perspektivische Ansicht der Verbindungsstelle zweier Säulenteile, die mit Kupplungen gemäss Fig. 1 bis 3 miteinander verbunden sind.

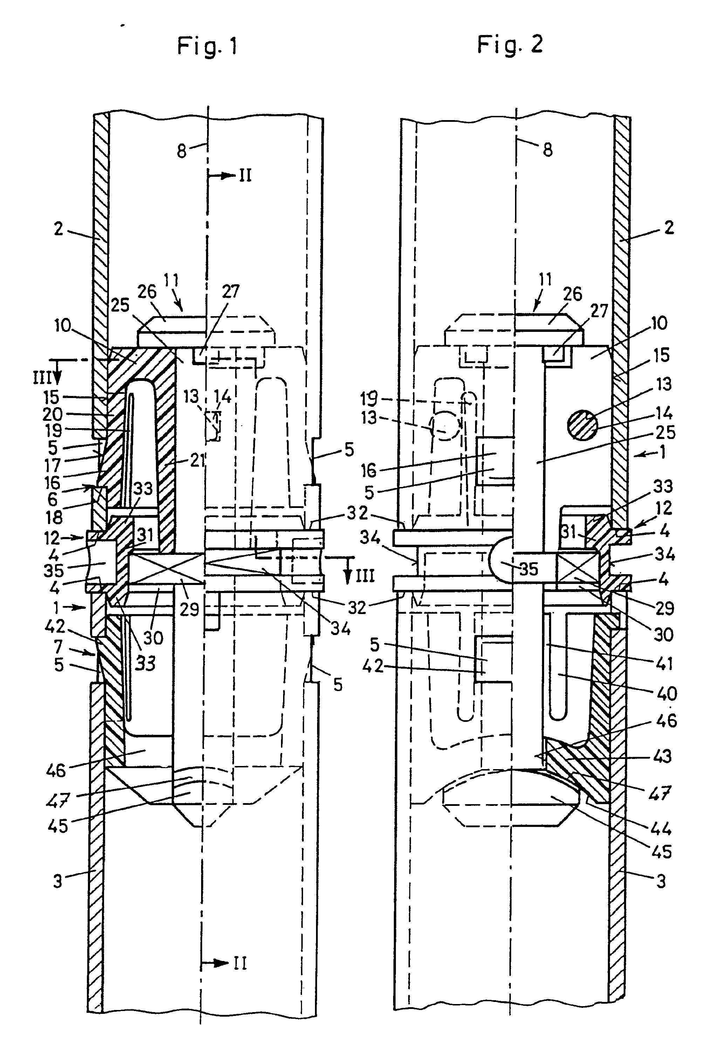

Die in Fig. 1 bis 3 dargestellte Kupplung 1 verbindet zwei koaxiale Rohre 2, 3 gleichen, kreisförmigen Querschnitts stirnseitig miteinander. Die Rohre 2, 3 haben benachbart ihren Stirnflächen 4 je zwei diametral gegenüberliegende, rechteckige Durchbrüche 5. In den Durchbrüchen 5 des Rohres 2 ist ein erstes Kupplungsteil 6, in den Durchbrüchen 5 des Rohres 3 ein zweites Kupplungsteil 7 eingeschnappt.

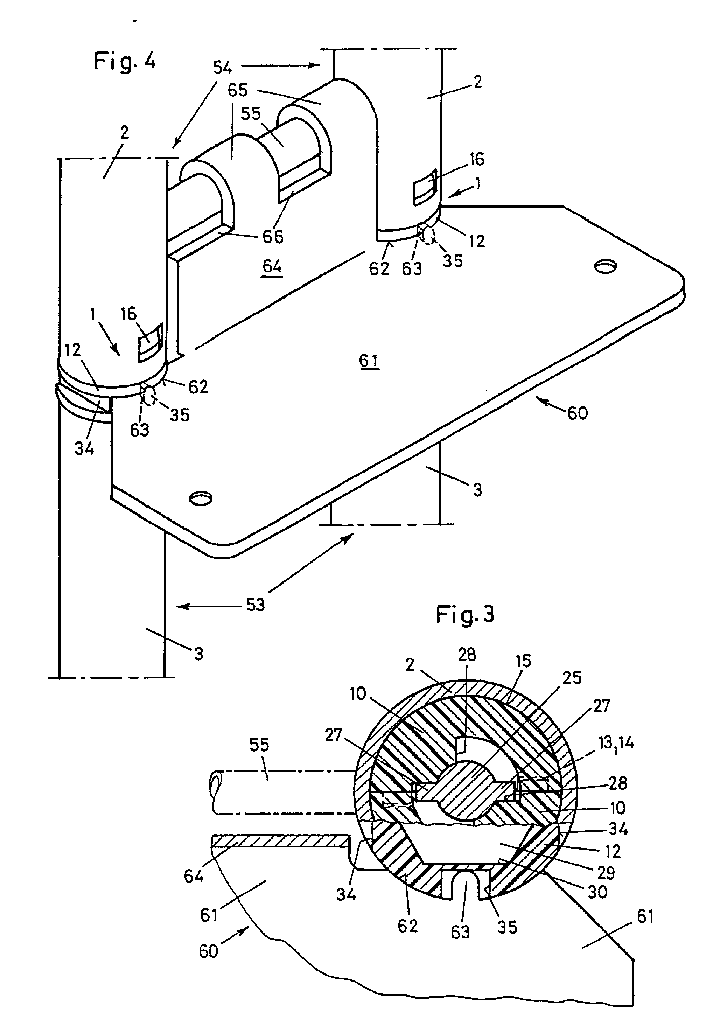

Das Kupplungsteil 6 besteht aus einer Büchse 10, einem Kupplungsbolzen 11 und einem Ring 12. Die Büchse 10 ist in der die Achse 8 der Rohre 2, 3 und Kupplung 1 enthaltenden Zeichenebene der Fig. 2 in zwei identische Hälften geteilt, die gegeneinander mit zwei in konische Löcher 13 eingreifende, senkrecht zur Trennebene abstehende Zapfen 14 zentriert sind. Jede Büchsenhälfte hat eine über den zylindrischen Aussenumfang 15 der Büchse 10 vorstehende Nase 16 mit einer vom Ring 12 abgewandten Keilfläche 17 und einer dem Ring 12 zugewandten radialen Stirnfläche 18. Die Nase 16 sitzt auf einer durch Längsschlitze 19 gebildeten, radial federnden Zunge 20 von annähernd der Breite des zugehörigen Durchbruchs 5 und ist in diesem Durchbruch 5 eingeschnappt. Ein Nabenteil 21 der Büchse 10 umschliesst einen zylindrischen Schaft 25 des Kupplungsbolzens 11. Der Kupplungsbolzen 11 ist in diesem Nabenteil 21 drehbar und axial unverschiebbar gelagert. Zur Begrenzung des Drehwinkels des Kupplungsbolzens 11 auf 90° sind anschliessend an einen stirnseitig an der Büchse 10 anliegenden Kopf 26 des Kupplungsbolzens 11 zwei Anschlagnasen 27 am Schaft 25 angeformt. Diese wirken mit entsprechenden Anschlagflächen 28 der Büchse 10 zusammen (Fig. 3).

Am gegenüberliegenden Ende liegt ein Sechskantflansch 29 des Kupplungsbolzens 11 am Nabenteil 21 an. Das Eckmass dieses Flansches 29 ist grösser als der Durchmesser des Kopfs 26. Der Flansch 29 sitzt in einer angepassten Sechskantausnehmung 30 des Ringes 12. Zwischen dem Sechskantflansch 29 und dem Kopf 26 hat der Ring 12 eine Verengung 31 mit einem Innendurchmesser, der geringer ist als das Eckmass des Sechskantflansches 29, jedoch grösser als der Durchmesser des Kopfs 26. Bei eingesetztem ersten Kupplungsteil 6 wird daher dessen Ring 12 durch den Flansch 29 in seiner Lage gehalten. Der Ring 12 hat zwei radiale Anlageschultern 32, die an den Stirnflächen 4 der Rohre 2, 3 anliegen, sowie beidseits je einen konischen Zentrieransatz 33, der in die Rohrenden eingesteckt ist. Zwischen den Anlageschultern 32 hat der Ring 12 zwei Schlüsselflächen 34. Mittels eines in diese Flächen eingreifenden Schlüssels kann der Ring 12 und damit der Kupplungsbolzen 11 gedreht werden. Um 90° versetzt zu diesen Schlüsselflächen 34 hat der Ring 12 zwei radiale Sacklöcher 35. Mindestens im Bereich dieser Sacklöcher 35 entspricht der Durchmesser des Rings 12 dem Durchmesser der Rohre 2, 3.

Das einstückige zweite Kupplungsteil 7 ist becherförmig und ist in analoger Weise im Rohr 3 befestigt wie die zweiteilige Büchse 10 im Rohr 2. Das Kupplungsteil 7 hat also ebenfalls zwei durch Längsschlitze 40 gebildete, radial federnde Zungen 41 mit Nasen 42, die in die Durchbrüche 5 des Rohres 3 eingerastet sind. Die in das Innere des Rohres 3 ragende Stirnfläche des Bodens 43 des Kupplungsteils 7 bildet eine konvex zylindrische Anlagefläche 44 für einen Riegel 45 des Kupplungsbolzens 11. Der Boden 43 ist durchbrochen durch ein axiales Langloch 46, durch welches der Riegel 45 passt. Die der Anlagefläche 44 zugewandte Stützfläche 47 des Riegels 45 ist sphärisch und hat den gleichen Krümmungsradius wie die Anlagefläche 44. Diese Ausbildung von Riegel 45 und Boden 43 ergibt beim Drehen des Kupplungsbolzens 11 einen Anzug, so dass die beiden Rohre 2, 3 gegen die Anlageschultern 32 des Ringes 12 festgespannt werden. Die Büchse 10, der Ring 12 und das zweite Kupplungsteil 7 bestehen zweckmässig aus einem formbeständigen, hochbelastbaren Kunststoff, z.B. aus Polyamid, allenfalls mit Faserverstärkung.

Die beschriebene Kupplung kann sehr rasch durch eine Drehung von 90° verbunden und wieder gelöst werden, und sie hat den Vorteil, dass sie nicht über den Durchmesser der Rohre 2, 3 vorsteht. Besonders gut geeignet ist die beschriebene Kupplung zum Verbinden senkrecht übereinander angeordneter Säulenelemente 53, 54 für einen Raumteiler, wenn die Säulenelemente 53, 54 aus je zwei vertikalen, voneinander beabstandeten, miteinander durch horizontale Verbindungsstangen 55 verbundenen Rohren 2, 3 mit Kreisquerschnitt bestehtn (Fig. 4). Die übereinander gestellten Rohre 2, 3 dieser Säulenelemente sind durch je eine Kupplungs 1 miteinander verbunden. Die Säulen 53, 54 tragen Trennelemente, z.B. Trennwände, Schrank- oder Schubladenelemente.

Diese Trennelemente ruhen auf L-förmig gebogenen Tablarträgern 60 aus Blech. Der untere, horizontale Schenkel 61 des Trägers 60 hat zwei kreissegmentförmige Einbuchtungen 62 zur Anlage an den beiden Ringen 12. Von jeder dieser Einbuchtungen 62 steht ein Vorsprung 63 ab, der im montierten Zustand in die Sackbohrungen 35 der Ringe 12 eingreift. Am vertikalen Schenkel 64 sind zwei um 180° umgebogene Finger 65 angeformt. Diese Finger 65 umgreifen im montierten Zustand die Verbindungsstangen 55 und übertragen die Last auf diese Stangen. Die Finger 65 sind asymmetrisch ausgebildet und lassen auf der einen Seite und zwischen sich je eine Lücke 66 offen, die breiter ist als die Fingerbreite. Dadurch können an der gleichen Verbindungsstange 55 zwei identische Träger 60 spiegelbildlich zur Mittelebene der Säulen 53, 54 eingehängt werden. Die Finger 65 des einen Trägers passen in die Lücken 66 des andern Trägers.

Wenn der Träger 60 eingesetzt und ein Tablar auf den Träger 60 aufgesetzt ist, ist dieser Träger fixiert und kann nach keiner Seite bewegt werden. Der Träger 60 sichert zugleich auch die Ringe 12. Ausserdem wird durch diese Ausbildung sichergestellt, dass die Kupplungen 1 völlig gekuppelt sind, denn wenn die Ringe 12 nicht oder bloss teilweise gedreht wurden, hängt der Träger 60 schief und das betreffende Trennelement kann nicht eingesetzt werden. Dieselben Träger 60 werden auch auf anderen Höhen der Säule 53, 54 verwendet. Dazu haben die Rohre 2, 3 unterhalb jeder der übrigen Verbindungsstangen 55 Querbohrungen entsprechend den Sacklöchern 35. Wegen dieser zusätzlichen Verwendung der Träger 60 haben die Ringe 12 im Bereich der Sackbohrungen 35 denselben Durchmesser wie die Rohre 2, 3.

**Ansprüche**

1. Kupplung zum lösbaren Verbinden zweier koaxialer Rohre (2, 3) gleichen Querschnitts, wobei die Kupplung (1) aus einem ins Ende des einen Rohres (2) einzustecken bestimmten ersten Kupplungsteil (6) und einem ins Ende des andern Rohres (3) einzustecken bestimmten zweiten Kupplungsteil (7) besteht, wobei das erste Kupplungsteil (6) eine Büchse (10), einen in der Büchse (10) um die Kupplungsachse (8) drehbaren, sich längs dieser Achse (8) erstreckenden Kupplungsbolzen (11), sowie einen drehfest mit dem Kupplungsbolzen (11) verbundenen, koaxialen Ring (12) mit je einer radialen Anlageschulter (32) zur Anlage der beiden Stirnflächen (4) der Rohre (2, 3), und mit je einem in das zugehörige Rohrende einsteckbaren Zentrieransatz (33) umfasst, und wobei der Kupplungsbolzen (11) mit einem Kopf (26) drehbar an der Büchse (10) anliegt, dadurch gekennzeichnet, dass die Büchse (10) und das zweite Kupplungsteil (7) je mindestens zwei radial federnde Rastnasen (16, 42) aufweisen zum Einschnappen in eine entsprechende Anzahl von Durchbrüchen (5) benachbart der Stirnfläche (4) der Rohre (2, 3), dass der Ring (12) Schlüsseleingriffselemente (34) zwischen den Anlageschultern (32) aufweist, und dass der Kupplungsbolzen (11) an dem dem Kopf (26) gegenüberliegenden Ende einen Riegel (45) trägt, dessen Breite geringer als die Breite eines axialen Langlochs (46) im zweiten Kupplungsteil (7) ist, wobei nach Durchschieben des Rieels (45) durch das Langloch (46) und nach dem Drehen des Kupplungsbolzens (11) der Riegel (45) das zweite Kupplungsteil (7) hintergreift.

2. Kupplung nach Anspruch 1, dadurch gekennzeichnet, dass die Büchse (10) längs einer die Achse (8) enthaltenden Ebene in zwei identische Teile geteilt ist, die an ihrer Trennfläche durch Zentrierelemente (13, 14) gegeneinander zentriert sind.

3. Kupplung nach Anspruch 2, dadurch gekennzeichnet, dass der Kupplungsbolzen einen radialen, unrunden Flansch (29) hat, dessen grösste radiale Abmessung grösser als der Radius des Kopfes (26) ist, dass der Flansch (29) in eine passende Ausnehmung (30) im Ring (12) eingesetzt ist, und dass der Ring (12) zwischen dem Flansch (29) und dem Kopf (26) eine Verengung (31) mit einer axialen Durchgangsbohrung hat, deren Radius grösser als der Kopfradius, aber kleiner als die grösste radiale Abmessung des Flansches (29) ist.

4. Kupplung nach einem der Ansprüche 1 bis 3, dadurch gekennzeichnet, dass ein zylindrischer Schaft (25) des Kupplungsbolzens (11) in der Büchse (10) drehbar gelagert ist.

5. Kupplung nach Anspruch 4, dadurch gekennzeichnet, dass vom Kupplungsbolzen (11) eine Anschlagnase (27) absteht, und dass in der Büchse (10) mit der Anschlagnase (27) zusammenwirkende Anschlagflächen (28) zur Begrenzung des Drehwinkels des Kupplungsbolzens (11) auf 90° angeordnet sind.

6. Kupplung nach einem der Ansprüche 1 bis 5, dadurch gekennzeichnet, dass das zweite Kupplungsteil (7) eine konvex zylindrische Anlagefläche (44) für den Riegel (45) aufweist, wobei die Krümmungsachse dieser Anlagefläche (44) senkrecht zur Kupplungsachse (8) verläuft, und dass die der Anlagefläche (44) zugewandte Stützfläche (47) des Riegels (45) annähernd sphärisch ist.

7. Kupplung nach einem der Ansprüche 1 bis 6, dadurch gekennzeichnet, dass der Ring (12) diametral gegenüberliegend zwei radiale Ausnehmungen (35) aufweist.

8. Tragsäule für einen Raumteiler, umfassend ein unteres Säulenelement (53) und ein oberes Säulenelement (54), die beide durch je zwei vertikale, voneinander beabstandete, miteinander durch horizontale Verbindungsstangen (55) verbundene Rohre (2, 3) gebildet sind, wobei die beiden Rohre (3) des unteren Säulenelementes (53) mit den beiden Rohren (2) des oberen Säulenelementes (54) durch je eine Kupplung (1) gemäss Anspruch 6 verbunden sind, und wobei jeweils das erste Kupplungsteil (6) in das obere Rohr (2) und das zweite Kupplungsteil (7) in das untere Rohr (3) eingesetzt ist.

9. Raumteiler nach Anspruch 8 mit einem Tablarträger (60) bestehend aus einem horizontalen Schenkel (61) zur Auflage eines Tablars und einem vertikalen Schenkel (64), der oben in um 180° umgebogene Finger (65) übergeht, die auf der Verbindungsstange (55) unmittelbar oberhalb den Kupplungen (1) eingehängt sind, wobei der horizontale Schenkel (61) zwei an den beiden Ringen (12) der Kupplungen (1) anliegende Einbuchtungen (62) aufweist, die je einen in eine der Ausnehmungen (35) des Rings (12) eingreifenden Vorsprung (63) haben.

## Claims

1. Coupling for the detachable connection of two coaxial pipes (2, 3) of equal diameter, with the coupling (1) consisting of a first coupling part (6) which is to be inserted into the end of one pipe (2) and a second coupling part (7) which is to be inserted into the end of the other pipe (3), whereby the first coupling part (6) comprises a bushing (10), a coupling pin (11) which is rotatable in the bushing (10) about the coupling axis (8) and extends along this axis (8), and also a coaxial ring (12) connected to the coupling pin (11) so as to be resistant to rotation and having one radial contact shoulder (32) in each case for the two end faces (4) of the pipes (2, 3) to bear on, and with one centring shoulder (33) in each case which can be inserted into the associated pipe end, and whereby the coupling pin (11) bears rotatably on the bushing (10) with a head (26), characterised in that the bushing (10) and the second coupling part (7) each have at least two radially resilient catch lugs (16, 42) for snapping into a corresponding number of openings (5) adjacent to the end face (4) of the pipes (2, 3), that the ring (12) has key engagement elements (34) between the contact shoulders (32), and that the coupling pin (11) at the end opposite the head (26) has a bar (45), the width of which is less than the width of an axial elongated hole (46) in the second coupling part (7), whereby the bar (45) engages behind the second coupling part (7) after the bar (45) is pushed through the elongated hole (46) and after the coupling pin (11) is rotated.

2. Coupling according to Claim 1, characterised in that the bushing (10) is divided along a plane containing the axis (8) into two identical parts, which are centred relative to each other at their parting plane by centring elements (13, 14).

3. Coupling according to Claim 2, characterised in that the coupling pin has a radial non-circular flange (29), the maximum radial dimension of which is greater than the radius of the head (26), that the flange (29) is inserted into a suitable recess (30) in the ring (12), and that the ring (12) has a restriction (31) with an axial through bore between the flange (29) and the head (26), the radius of which bore is greater than the head radius, but smaller than the maximum radial dimension of the flange (29).

4. Coupling according to one of Claims 1 to 3, characterised in that a cylindrical shank (25) of the coupling pin (11) is rotatably mounted in the bushing (10).

5. Coupling according to Claim 4, characterised in that a stop lug (27) projects from the coupling pin (11), and that stop surfaces (28) which cooperate with the stop lug (27) for limiting the angle of rotation of the coupling pin (11) to 90° are arranged in the bushing (10).

6. Coupling according to one of Claims 1 to 5, characterised in that the second coupling part (7) has a convex cylindrical contact surface (44) for the bar (45), with the axis of curvature of this contact surface (44) extending perpendicular to the coupling axis (8), and that the supporting surface (47) of the bar (45) facing the contact surface (44) is approximately spherical.

7. Coupling according to one of Claims 1 to 6, characterised in that the ring (12) has two radial recesses (35) diametrically opposite each other.

8. Supporting column for a space divider, comprising a lower column element (53) and an upper column element (54), which are both formed by two vertical spaced-apart pipes (2, 3) connected together by horizontal connecting rods (55), with the two pipes (3) of the lower column element (53) each being connected to the two pipes (2) of the upper column element (54) by one coupling (1) according to Claim 6, and whereby in each case the first coupling part (6) is inserted into the upper pipe (2) and the second coupling part (7) into the lower pipe (3).

9. Space divider according to Claim 8, with a tabular object support (60) consisting of a horizontal arm (61) for placing a tabular object on and a vertical arm (64) which merges at the top into fingers (65) bent over by 180° which are suspended on the connecting rod (55) directly above the couplings (1), with the horizontal arm (61) having two indentations (62) contacting the two rings (12) of the couplings (1), which indentations each have a projection (63) which engages in one of the recesses (35) of the ring (12).

**Revendications**

1. Raccord destiné à une liaison amovible de deux tubes coaxiaux (2, 3) de même section, le raccord (1) étant constitué par un premier élément de raccord (6) destiné à être enfoncé dans l'extrémité d'un tube (2) et par un second élément de raccord (7) destiné à être enfoncé dans l'extrémité de l'autre tube 3, le premier élément de raccord (6) comprenant une douille (10), un tourillon de raccord (11) s'étendant le long de la douille (10) et pouvant tourner autour de l'axe (8) du raccord, ainsi qu'un anneau coaxial (12) relié de façon fixe en rotation au tourillon de raccord (11) et comprenant un épaulement d'appui radial respectif (32) destiné à l'appui des deux surfaces frontales (4) des tubes (2, 3), et comprenant chacun un élément de centrage (33) pouvant être enfoncé dans l'extrémité du tube associé, et dans lequel le tourillon de raccord (11) repose par une tête (26) de façon rotative contre la douille (10), caractérisé en ce que la douille (10) et le second élément de raccord (7) comprennent au moins deux nez d'arrêt élastiques et radiaux (16, 42) destinés à s'enclencher dans un nombre correspondant de passages (5) au voisinage de la surface frontale (4) des tubes (2, 3), en ce que l'anneau (12) comprend des éléments d'introduction de clé (34) entre les épaulements d'appui (32), et en ce que le tourillon de raccord (11) supporte à son extrémité qui est à l'opposé de la tête (26) un verrou (45) dont la largeur est inférieure à la largeur d'un trou allongé axial (46) constitué dans le second élément de raccord (7), ce qui fait que lorsqu'on enfonce le verrou (45) dans le trou allongé (46) et que l'on fait tourner le tourillon de raccord (11), le verrou (45) se dispose au-dessous du second élément de raccord (7).

2. Raccord selon la revendication 1, caractérisé en ce que la douille (10) est subdivisée le long d'un plan contenant l'axe (8) en deux parties identiques qui sont centrées l'une par rapport à l'autre au niveau de leur surface de séparation par des éléments de centrage (13, 14).

3. Raccord selon la revendication 2, caractérisé en ce que le tourillon de raccord présente une bride radiale non ronde (29) dont la dimension radiale la plus grande est supérieure au rayon de la tête (26), en ce que la bride (29) est enfoncée dans un évidement adapté (30) de l'anneau (12), et en ce que l'anneau (12) présente entre la bride (29) et la tête (26) une partie rétrécie (31) avec un alésage traversant axial dont le rayon est supérieur au rayon de la tête, mais inférieur à la dimension radiale la plus grande de la bride (29).

4. Raccord selon l'une quelconque des revendications 1 à 3, caractérisé en ce qu'une tige cylindrique (25) du tourillon de raccord (11) est montée à rotation dans la douille (10).

5. Raccord selon la revendication 4, caractérisé en ce qu'un nez de butée (27) fait saillie du tourillon de raccord (11), et en ce que des surfaces de butée (28) coopérant dans la douille (10) avec les nez de butée (27) sont prévus pour limiter l'angle de rotation du tourillon de raccord (11) à 90°.

6. Raccord selon l'une quelconque des revendications 1 à 5, caractérisé en ce que le second élément de raccord (7) présente une surface d'appui cylindrique convexe (44) pour le verrou (45), l'axe de courbure de cette surface d'appui (44) étant perpendiculaire à l'axe (8) du raccord, et en ce que la surface de support (47) du verrou (35) qui est tournée vers la surface d'appui (44) est approximativement sphérique.

7. Raccord selon l'une quelconque des revendications 1 à 6, caractérisé en ce que l'anneau (12) comprend deux évidements radiaux (35) diamétralement opposés.

8. Colonne-porteuse destinée à un panneau de division, comprenant un élément de colonne inférieur (53) et un élément de colonne supérieur (54), les deux étant constitués par des tubes verticaux (2, 3) situés à une certaine distance l'un de l'autre et reliés l'un à l'autre par des tiges de liaison horizontales (55), les deux tubes (3) de l'élément de colonne inférieur (53) étant relié aux deux tubes (2) de l'élément de colonne supérieur (54) par un raccord respectif (1) selon la revendication 6, le premier élément de raccord (6) étant introduit dans le tube supérieur (2) et le second élément de raccord (7) dans le tube inférieur (3).

9. Panneau de séparation selon la revendication 8, comprenant un support (60) constitué par une branche horizontale (61) pour recevoir une plaque et une branche verticale (64) qui se prolonge vers le haut par des doigts repliés sur 180° (65) qui sont suspendus à la tige de liaison (55) directement au-dessus des raccords (1), la branche horizontale (61) comprenant deux découpes (62) reposant sur les deux anneaux (12) des raccords (1), et présentant respectivement une saillie (63) pénétrant dans l'un des évidements (35) de l'anneau (12).

Fig. 1

Fig. 2

Fig. 4

Fig. 3